# EUROPEAN PATENT SPECIFICATION

(11) **EP 2 669 463 B1**
(45) Date of publication and mention of the grant of the patent: **08.08.2018**
(21) Application number: 12170173.4
(22) Date of filing: 31.05.2012
(51) Int. Cl.: E21B 21/16, E21B 7/02

(54) **A ROCK DRILLING RIG AND METHOD OF DRIVING COMPRESSOR**
STEINBOHRANLAGE UND VERFAHREN ZUM ANTREIBEN EINES KOMPRESSORS
APPAREIL DE FORAGE DE ROCHES ET PROCÉDÉ DE COMMANDE DE COMPRESSEUR

(43) Date of publication of application: 04.12.2013
(73) Proprietor: Sandvik Mining and Construction Oy, 33330 Tampere (FI)
(72) Inventor: Piipponen, Juha, 33330 Tampere (FI); Sormunen, Tapani, 33330 Tampere (FI)
(74) Representative: Sandvik

(56) References cited:
- WO-A1-99/54158
- WO-A1-03/093699
- WO-A1-2004/089674
- WO-A1-2009/077656
- WO-A1-2011/080392
- JP-A- 2008 231 762

## Description

### Background of the invention

The invention relates to a rock drilling rig, and particularly to an arrangement for driving a compressor of the rock drilling rig.

The invention further relates to a method of driving a compressor of a rock drilling rig.

The field of the invention is defined more specifically in the preambles of the independent claims.

In mines and other work sites rock drilling rigs are used for drilling bore holes to rock surfaces. Typically the rock drilling rig comprises an internal combustion engine for producing needed energy. Further, the rock drilling rig is provided with a boom and a drilling unit in the boom. During a drilling procedure drilling cuttings are formed in the bore hole. The drilling cuttings are flushed away from the bore hole by means of flushing medium. Typically pressurized air is used for flushing. Thus, the rock drilling rig includes a compressor for producing the needed flushing air. It has been noted that a flushing system causes significant loading to the combustion engine.

WO2011/080392-A1 discloses a mining vehicle connected to an electrical network for primary energy and having an auxiliary energy source for additional energy. Further, WO03/093699-A1 discloses an arrangement for driving a compressor by means of a combustion engine and a planetary gear.

### Brief description of the invention

An object of the invention is to provide a novel and improved rock drilling rig provided with a compressor arrangement and a method of driving a compressor.

The rock drilling rig according to the invention is characterized by the features of independent apparatus claim.

The method according to the invention is characterized by the features of independent method claim.

An idea of the disclosed solution is that a combustion-engine-operated rock drilling rig is provided with a compressed air system comprising one or more compressors. The compressor is driven by one or more electric motors. Kinetic energy produced in the combustion engine is not transmitted to the compressor.

An advantage of the disclosed solution is that the compressor can be driven mechanically and physically independently of the combustion engine of the rock drilling rig. The compressor can be driven accurately and according to the need for pressurized air. This way, unnecessary production of compressed air can be avoided and fuel consumption of a combustion engine can be decreased.

According to the invention, electric energy is charged in one or more electric energy storages and the stored electric energy is utilized in driving the electric motor of the compressor. Thanks to the use of stored electrical energy, loading and fuel consumption of a combustion engine can be decreased. The energy storage makes it possible to balance the loading of the combustion engine, whereby a combustion engine with lower power capacity can be used.

According to an embodiment, the electric compressor drive motor is driven only by means of electric energy received from the energy storage.

According to an embodiment, the electric compressor drive motor is driven by means of electric energy received from the energy storage and the generator driven by the combustion engine. The use of the energy storage decreases loadings of the generator and the combustion engine.

According to an embodiment, output capacity of the combustion engine is dimensioned by taking into account the lower power need due to the electric drive of the compressor and electric power taken from the electric storage. The combustion engine may then be dimensioned to have lower power capacity, whereby the engine may be smaller in size and less expensive.

According to an embodiment, the electric energy storage is a battery or a battery package including several batteries.

According to an embodiment, the combustion engine is a diesel engine.

According to an embodiment, the rock drilling rig comprises a control unit for controlling the operation of a flushing system. The control unit monitors the drilling unit and detects the need for pressurized air. Based on the monitoring, the control unit is configured to automatically adjust the running speed of the compressor. This way, the production of pressurized air, i.e. pressure and flow, is adjusted according to the drilling process and consumption of pressurized air.

According to an embodiment, the rock drilling rig comprises a control unit for controlling the operation of the flushing system. The control unit monitors a tramming unit and detects if a carrier is transfer-driven. Based on the monitoring, the control unit is configured to automatically switch off the electrical compressor drive motor for duration of the detected transfer drive. In this way, unnecessary production of pressurized air during the transfer drive is avoided.

According to an embodiment, the operator switches off the electric compressor drive motor for the duration of a transfer drive of the rock drilling rig. Further, the compressor can be stopped for the duration of any other interruptions in the drilling procedure and situations when there is no need for pressurized air. In this way, unnecessary production of pressurized air is avoided and energy is saved.

According to an embodiment, the electric system comprises at least one control device for controlling rotation of the electric compressor drive motor. The drive of the compressor drive motor can be controlled steplessly. The control device for controlling running of the electric motor can be a frequency converter, such as an inverter or a DC/AC converter. Thanks to this embodiment, the output capacity of the compressor can be adjusted in a versatile and effective way, and further, the control is accurate too. Alternatively, the drive of the compressor drive motor can be controlled in predetermined steps or ramps.

According to an embodiment, the tramming unit comprises one or more electric tramming drive motors connected to the electric system and generating power for the transport drive. Electric energy stored in one or more electric energy storage can be utilized in either entirely or partly when running the tramming motor. Thanks to the use of stored electrical energy, loading and fuel consumption of a combustion engine can be decreased.

According to an embodiment, the rock drilling machine is electrically operated and connected to the electrical system. Electrical energy stored in one or more electrical energy storage can be utilized either entirely or partly when running the rock drilling machine. Thanks to the use of stored electrical energy, loading and fuel consumption of a combustion engine can be decreased.

According to an embodiment, the rock drilling rig comprises at least one auxiliary unit which is electrically operated. The auxiliary unit may be a hydraulic unit, for example. The hydraulic unit may produce needed hydraulic pressure for hydraulic cylinders of a boom and other hydraulic auxiliary actuators. The hydraulic unit comprises a hydraulic pump which is electrically driven and connected to the electric system. Electric energy stored in one or more electric energy storages can be utilized either entirely or partly when running the hydraulic pump. Thanks to the use of stored electric energy, loading and fuel consumption of a combustion engine can be decreased.

According to an embodiment, the rock drilling rig comprises a control unit which is configured to determine the drilling efficiency during a drilling process. The control unit may control an electric system to increase storage of electric energy to an energy storage when drilling is performed under maximum efficiency. Thus, when a drilling unit needs less power and the combustion engine has free capacity, more electric energy can be generated by a generator and then stored in the energy storage. Possible extra capacity can be used for charging batteries.

According to an embodiment, the rock drilling rig comprises a control unit which is configured to determine current loading of a combustion engine. The control unit may control an electric system to increase consumption of electric energy stored in an energy storage proportionally to the detected increase in load of the combustion engine. In this way, electric energy of the batteries are used more and more for driving different electric drive motors connected to the electric system in situations when the combustion engine is heavily loaded. This embodiment balances the loading of the combustion engine.

According to an embodiment, the disclosed solution is utilized in top hammer drilling. The drilling unit comprises a top hammer type percussion device which is located at the opposite end of a drilling tool relative to the drill bit.

According to an embodiment, the disclosed solution is utilized in down-the-hole (DTH) drilling. The drilling unit comprises a down-the hole type percussion device which is located at the same end of the drilling tool as the drill bit.

According to an embodiment, the disclosed solution is utilized in rotary drilling. The drilling unit is without any percussion device but, instead, a drilling tool is rotated by means of a rotating device.

According to an embodiment, the disclosed compressor arrangement and procedure are intended for a surface drilling rig which is designed for above ground drilling in opencast mines and other working sites, such as in road, construction and other contracting work sites.

According to an embodiment, the disclosed control procedures are carried out by executing one or more software or computer programs designed for the purpose. The computer program comprises program code means configured to execute the disclosed actions and steps when run on a computer.

Above disclosed embodiments can be combined in order to form suitable solutions provided with necessary features.

### Brief description of the figures

Some embodiments are described in more detail in the accompanying drawings, in which
Figure 1 is a schematic side view showing a rock drilling rig for surface working sites,
Figure 2 is a schematic view showing a principle of down-the-hole drilling,
Figure 3 is a schematic side view showing a rock drilling rig for underground working sites,
Figure 4 illustrates a control block diagram of a control system of a rock drilling rig, and
Figure 5 is a simplified chart showing an electric system of a rock drilling rig.

For the sake of clarity, the figures show some embodiments of the disclosed solution in a simplified manner. In the figures, like reference numerals identify like elements.

### Detailed description of some embodiments

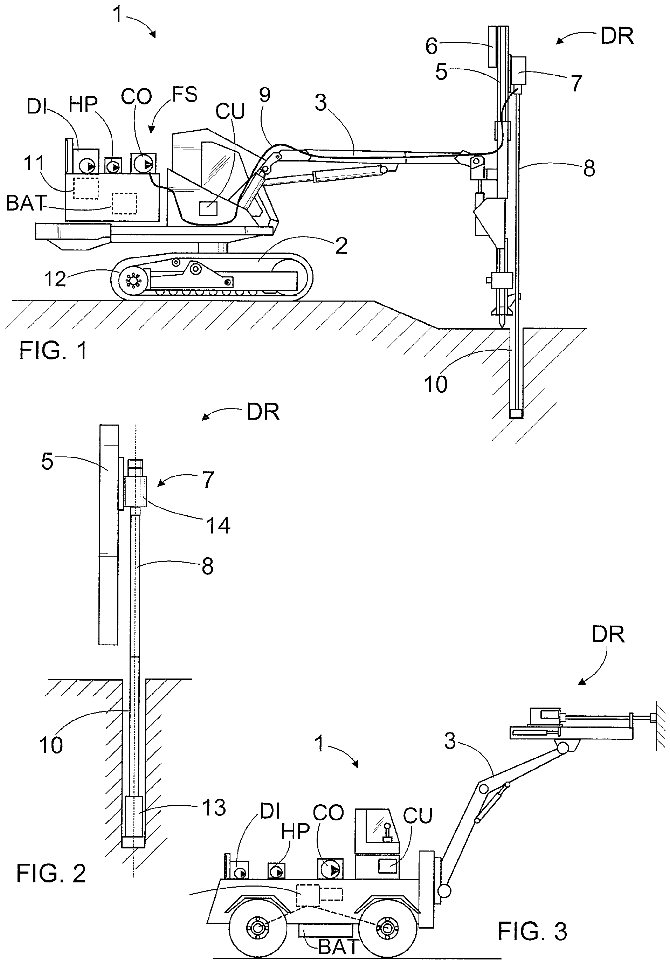

Figure 1 shows a feasible rock drilling rig 1 comprising a movable carrier 2 which is provided with one or more booms 3 equipped with a drilling unit DR. The drilling unit DR may comprise a feed beam 5 provided with a rock drilling machine 7 that can be moved on the feed beam 5 by means of a feed device 6. The rock drilling machine 7 may comprise a percussion device for generating impact pulses on a tool 8, and a rotating device for rotating the tool 8. Further, the rig 1 may include a flushing system FS comprising one or more compressors CO for producing compressed air which may be conveyed through a flushing channel 9 to the drilling machine 7 and through the tool 8 to a bore hole 10.

Further, the rock drilling rig 1 may comprise a hydraulic system, which includes a hydraulic pump HP, hydraulic channels, a tank and necessary control means, such as valves and the like. Further, one or more hydraulic actuators may be connected to the hydraulic system.

The rock drilling rig 1 also comprises one or more control units CU arranged to control the systems of the rock drilling rig 1. The control unit CU may be a computer or a corresponding control device comprising a processor, a programmable logic or any other control device suitable for the purpose, to which it is possible to set at least one control strategy, according to which the control unit carries out controlling independently or in cooperation with the operator.

At a drilling site, one or more boreholes are drilled with the drilling unit DR. After the drilling operation, the rig 1 is moved to the next drilling site or position. The rock drilling rig 1 is provided with drive equipment which includes transmission 11 for conveying rotational movement to moving members 12, such as chain tracks or wheels. On the carrier 2, there is also a combustion engine DI, which may be a diesel engine. The combustion engine DI serves as a power unit for producing needed kinetic energy. The kinetic energy can be transmitted via the transmission 11 to the moving members 12 and further to one or more generators for producing needed electrical energy. Electric energy can be stored in one or more energy storages BAT, such as a battery or a battery package. The compressor CO and the hydraulic pump HP can be controlled according to the principles described in this patent application. Further, the needed kinetic power for transport drive can be formed by means of one or more electric tramming drive motors which may also be controlled as disclosed above.

Figure 2 illustrates a basic principle of a drilling unit DR for down-the-hole DTH drilling, which differs from the top-hammer-drilling shown in Figure 1 in such way that a percussion device 13 is arranged at an opposite end of a tool 8 as compared to a rotating device 14 of the drilling machine 7. It is also possible that the drilling machine does not include any percussion device, whereby it is called rotary drilling. The above-disclosed flushing system and control principles can be applied to DTH and rotary drilling too.

Figure 3 discloses a rock drilling rig 1 suitable for underground drilling when tunnels and rock cavities are excavated, and also when ore is mined. Principles and embodiments disclosed above apply also to this type of rock drilling.

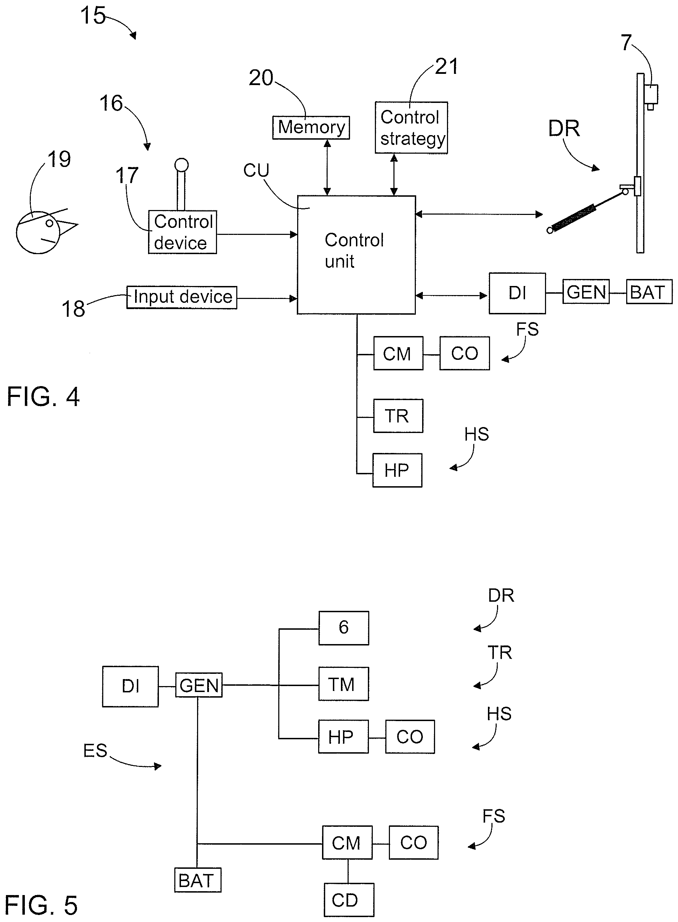

Figure 4 shows a control system 15 comprising one or more control units CU and input means 16 for feeding control data and commands to the control unit CU. The input means may include a control device 17, such as a joy-stick, and an input device 18, such as a keypad, by means of which an operator 19 may communicate with the control unit CU. Further, the control unit CU may read data from one or more memory units 20 and also store data therein. The control unit CU may be provided with one or more control strategies 21 including operating principles and guidelines for controlling the flushing system FS and possibly also other electric systems of the rock drilling rig, such as the traction system and auxiliary systems. The control strategy 21 may include an algorithm for automatically controlling the electric compressor drive motor CM. Control data and parameters may be stored in the memory unit or media 20. Monitoring information and measuring data may be gathered by means of sensors or measuring devices from the systems and actuators connected to the electric system. Also the operation of the combustion engine DI can be monitored. Monitoring or sensing data can be transmitted to the control unit CU. The control unit CU may be a computer equipped with an appropriate processor capable of running a software program including a control algorithm and also processing measuring data for producing control information. On the basis of the measuring data, manual control commands and the control strategy, the control unit CU produces control commands for the disclosed system and allows the disclosed control according to the above presented principles.

In Figure 5 it is shown a simplified chart of an electric system ES of a rock drilling rig. The combustion engine DI drives the generator GEN and electric energy is produced. By means of the generated electric energy, the electric system of the drilling rig is driven. The drilling unit DR, the tramming unit TR and the auxiliary unit, such as the hydraulic system HS, can be driven by the energy produced by the generator GEN. Further, the generated energy can be used to charge the energy storage BAT. There may be a voltage transformer between the generator and the energy storage. The flushing system FS can be driven by means of the energy stored in the energy storage BAT. Alternatively electric energy can be directed to the flushing system FS from two sources, namely from the energy storage BAT and the generator GEN.

The flushing system FS may further include a control device CD, which may comprise a frequency converter, by which the rotation of the electric compressor drive motor CM can be controlled steplessly. The operation of the control device CM may be controlled by a control unit CU.

The drawings and the related description are only intended to illustrate the idea of the invention. In its details, the invention may vary within the scope of the claims.

## Claims

1. A rock drilling rig comprising:
a movable carrier (2);
a tramming unit (TR) for performing transfer drive of the carrier (2);
at least one drilling boom (3) movable relative to the carrier (2) and provided with a drilling unit (DR) comprising a rock drilling machine (7);
a flushing system (FS) comprising at least one compressor (CO) for producing pressurized air utilized in flushing a drill hole (10) during drilling;
a combustion engine (DI) for producing kinetic energy;
at least one generator (GEN) arranged to be driven by the combustion engine (DI) and arranged to produce electric energy to an electric system (ES); and
at least one energy storage (BAT) connected to the electric system (ES) and arranged to store electric energy produced by the at least one generator (GEN);
**characterized in that**
the rock drilling rig is combustion-engine operated whereby at least one of the tramming unit (TR) and the drilling unit (RD) is operated with kinetic energy produced by the combustion engine (DI) and the needed electric energy of the rock drilling rig is produced to the electric system (ES) by the at least one generator (GEN) driven by the combustion engine; and
the at least one compressor (CO) of the flushing system (FS) is driven by means of at least one electric compressor drive motor (CM) connected to the electric system (ES) and arranged to receive electric energy from the energy storage (BAT) of the electric system (ES);
wherein electric energy stored to or received from the energy storage (BAT) is controlled to depend on loading of the combustion engine (DI).

2. A rock drilling rig as claimed in claim 1,
**characterized in that**
the at least one electric compressor drive motor (CM) is driven by means of electric energy received from the at least one energy storage (BAT).

3. A rock drilling rig as claimed in claim 1,
**characterized in that**
the at least one electric compressor drive motor (CM) is driven by means of electric energy received from the at least one energy storage (BAT) and the at least one generator (GEN).

4. A rock drilling rig as claimed in any one of preceding claims,
**characterized in that**
the rock drilling rig (1) comprises at least one control unit (CU) for controlling the operation of the flushing system (FS);
the control unit (CU) is arranged to monitor the drilling unit (DR); and
the control unit (CU) is arranged to adjust the running speed of the compressor (CO) and the production of pressurized air according to the drilling process.

5. A rock drilling rig as claimed in any one of preceding claims,
**characterized in that**
the rock drilling rig (1) comprises at least one control unit (CU) for controlling the operation of the flushing system (FS);
the control unit (CU) is arranged to monitor the tramming unit (TR) and to detect transfer drive of the carrier (2); and
the control unit (CU) is arranged to switch off the electric compressor drive motor (CM) for the duration of the transfer drive.

6. A rock drilling rig as claimed in any one of preceding claims,
**characterized in that**
the electric system (ES) comprises at least one control device (CD) for controlling rotation of the electric compressor drive motor (CM).

7. A rock drilling rig as claimed in any one of preceding claims,
**characterized in that**
the tramming unit (TR) comprises at least one electric tramming drive motor (TM) connected to the electric system (ES) and generating power for the transport drive.

8. A rock drilling rig as claimed in any one of preceding claims,
**characterized in that**
the rock drilling machine is electrically operated and connected to the electric system (ES).

9. A rock drilling rig as claimed in any one of preceding claims,
**characterized in that**
the rock drilling rig (2) comprises a hydraulic system (HS) and hydraulic actuators connected to the hydraulic system (HS);
the hydraulic system (HS) comprises at least one hydraulic pump (HP) for generating hydraulic pressure; and
the hydraulic pump (HP) is electrically driven and connected to the electric system (ES).

10. A method of driving a compressor of a rock drilling rig which is provided with a combustion engine (DI);
the method comprising:
driving a compressor (CO) by means of a motor; and
conducting produced pressurized air to a flushing system (FS);
**characterized by**
producing kinetic energy for operating at least one of a tramming unit (TR) and a drilling unit (RD) of the rock drilling rig by the combustion engine (DI) and the needed electric energy for an electric system (ES) of the rock drilling rig by at least one generator (GEN) driven by the combustion engine (DI);
storing produced electric energy in at least one energy storage (BAT) of the electric system (ES); and
driving the compressor (CO) by means of an electric compressor drive motor (CM) receiving electric energy from the energy storage (BAT) of the electric system (ES) mechanically independently of the combustion engine (DI);
wherein electric energy stored to or received from the energy storage (BAT) is controlled to depend on loading of the combustion engine (DI).

11. A method as claimed in claim 10,
**characterized by**
driving the electric compressor drive motor (CM) by utilizing electric energy stored in at least one energy storage (BAT).

12. A method as claimed in claim 10 or 11,
**characterized by**
adjusting the production of pressurized air according to the drilling process.

13. A method as claimed in any one of the preceding claims 10 to 12,
**characterized by**
determining drilling efficiency during a drilling process; and increasing storage of electric energy to at least one energy storage (BAT) when drilling is performed under maximum efficiency.

14. A method as claimed in any one of the preceding claims 10 to 13,
**characterized by**
determining current loading of the combustion engine (DI); and increasing consumption of electric energy stored in at least one energy storage (BAT) proportionally to the detected increase in the load of the combustion engine (DI).

15. A method as claimed in any one of the preceding claims 10 to 14,
**characterized by**
determining the current use of compressed air; and
switching off the electric compressor drive motor (CM) when compressed air is not used.

## Patentansprüche

1. Gesteinsbohranlage, umfassend:
einen beweglichen Träger (2);
eine Verfahreinheit (TR), um Transferfahrten des Trägers (2) durchzuführen;
mindestens einen Bohrausleger (3), der relativ zu dem Träger (2) beweglich und mit einer Bohreinheit (DR), die eine Gesteinsbohrmaschine (7) umfasst, versehen ist;
ein Spülsystem (FS), das mindestens einen Verdichter (CO) zum Erzeugen von Druckluft umfasst, die beim Spülen eines Bohrlochs (10) während eines Bohrens genutzt wird;
einen Verbrennungsmotor (DI) zum Erzeugen von kinetischer Energie;
mindestens einen Generator (GEN), der angeordnet ist, um von dem Verbrennungsmotor (DI) angetrieben zu werden, und angeordnet ist, um elektrische Energie für ein elektrisches System (ES) zu erzeugen; und
mindestens einen Energiespeicher (BAT), der mit dem elektrischen System (ES) verbunden und angeordnet ist, um elektrische Energie, die von dem mindestens einen Generator (GEN) erzeugt wird, zu speichern;
**dadurch gekennzeichnet, dass**
die Gesteinsbohranlage verbrennungsmotorbetrieben ist, wobei mindestens eine von der Verfahreinheit (TR) und der Bohreinheit (RD) mit kinetischer Energie betrieben wird, die von dem Verbrennungsmotor (DI) erzeugt wird, und die benötigte elektrische Energie der Gesteinsbohranlage für das elektrische System (ES) von dem mindestens einen Generator (GEN), der von dem Verbrennungsmotor angetrieben wird, erzeugt wird; und
der mindestens eine Verdichter (CO) des Spülsystems (FS) mittels mindestens eines elektrischen Verdichterantriebsmotors (CM) angetrieben wird, der mit dem elektrischen Systesm (ES) verbunden und angeordnet ist, um elektrische Energie von dem Energiespeicher (BAT) des elektrischen Systems (ES) zu empfangen;
wobei elektrische Energie, die in dem Energiespeicher (BAT) gespeichert oder von diesem empfangen wird, geregelt wird, um von einer Last des Verbrennungsmotors (DI) abzuhängen.

2. Gesteinsbohranlage nach Anspruch 1,
**dadurch gekennzeichnet, dass**
der mindestens eine elektrische Verdichterantriebsmotor (CM) mittels elektrischer Energie, die von dem mindestens einen Energiespeicher (BAT) empfangen wird, angetrieben wird.

3. Gesteinsbohranlage nach Anspruch 1,
**dadurch gekennzeichnet, dass**
der mindestens eine elektrische Verdichterantriebsmotor (CM) mittels elektrischer Energie, die von dem mindestens einen Energiespeicher (BAT) und dem mindestens einen Generator (GEN) empfangen wird, angetrieben wird.

4. Gesteinsbohranlage nach einem der vorstehenden Ansprüche,
**dadurch gekennzeichnet, dass**
die Gesteinsbohranlage (1) mindestens eine Regelungseinheit (CU) umfasst, um den Betrieb des Spülsystems (FS) zu regeln;
die Regelungseinheit (CU) angeordnet ist, um die Bohreinheit (DR) zu überwachen; und
die Regelungseinheit (CU) angeordnet ist, um die Laufgeschwindigkeit des Verdichters (CO) und die Erzeugung von Druckluft an den Bohrvorgang anzupassen.

5. Gesteinsbohranlage nach einem der vorstehenden Ansprüche,
**dadurch gekennzeichnet, dass**
die Gesteinsbohranlage (1) mindestens eine Regelungseinheit (CU) umfasst, um den Betrieb des Spülsystems (FS) zu regeln;
die Regelungseinheit (CU) angeordnet ist, um die Verfahreinheit (TR) zu überwachen und Transferfahrten des Trägers (2) zu detektieren; und
die Regelungseinheit (CU) angeordnet ist, um den elektrischen Verdichterantriebsmotor (CM) für die Dauer der Transferfahrt abzuschalten.

6. Gesteinsbohranlage nach einem der vorstehenden Ansprüche,
**dadurch gekennzeichnet, dass**
das elektrische System (ES) mindestens eine Regelungsvorrichtung (CD) umfasst, um die Drehung des elektrischen Verdichterantriebsmotors (CM) zu regeln.

7. Gesteinsbohranlage nach einem der vorstehenden Ansprüche,
**dadurch gekennzeichnet, dass**
die Verfahreinheit (TR) mindestens einen elektrischen Verfahrantriebsmotor (TM) umfasst, der mit dem elektrischen System (ES) verbunden ist und Leistung für die Transportfahrt generiert.

8. Gesteinsbohranlage nach einem der vorstehenden Ansprüche,
**dadurch gekennzeichnet, dass**
die Gesteinsbohranlage elektrisch betrieben wird und mit dem elektrischen System (ES) verbunden ist.

9. Gesteinsbohranlage nach einem der vorstehenden Ansprüche,
**dadurch gekennzeichnet, dass**
die Gesteinsbohranlage (2) ein hydraulisches System (HS) und hydraulische Aktuatoren, die mit dem hydraulischen System (HS) verbunden sind, umfasst;
das hydraulische System (HS) mindestens eine hydraulische Pumpe (HP) zum Generieren von hydraulischem Druck umfasst; und
die hydraulische Pumpe (HP) von dem elektrischen System (ES) elektrisch angetrieben wird und mit diesem verbunden ist.

10. Verfahren zum Antreiben eines Verdichters eine Gesteinsbohranlage, die mit einem Verbrennungsmotor (DI) versehen ist;
wobei das Verfahren umfasst:
Antreiben eines Verdichters (CO) mittels eines Motors; und
Leiten von erzeugter Druckluft zu einem Spülsystem (FS);
**gekennzeichnet durch**
Erzeugen von kinetischer Energie zum Betreiben mindestens eines von einer Verfahreinheit (TR) und einer Bohreinheit (RD) der Gesteinsbohranlage durch den Verbrennungsmotor (DI) und der benötigten elektrischen Energie für ein elektrisches System (ES) der Gesteinsbohranlage durch mindestens einen Generator (GEN), der von dem Verbrennungsmotor (DI) angetrieben wird;
Speichern von erzeugter elektrischer Energie in mindestens einem Energiespeicher (BAT) des elektrischen Systems (ES); und
Antreiben des Verdichters (CO) mittels eines elektrischen Verdichterantriebsmotors (CM), der elektrische Energie von dem Energiespeicher (BAT) des elektrischen Systems (ES) empfängt, mechanisch unabhängig von dem Verbrennungsmotor (DI);
wobei elektrische Energie, die in dem Energiespeicher (BAT) gespeichert oder von diesem empfangen wird, geregelt wird, um von einer Last des Verbrennungsmotors (DI) abzuhängen.

11. Verfahren nach Anspruch 10,
**gekennzeichnet durch**
Antreiben des elektrischen Verdichterantriebsmotors (CM) durch Nutzung von elektrischer Energie, die in dem mindestens einen Energiespeicher (BAT) gespeichert ist.

12. Verfahren nach Anspruch 10 oder 11,
**gekennzeichnet durch**
Anpassen der Erzeugung von Druckluft an den Bohrvorgang.

13. Verfahren nach einem der Ansprüche 10 bis 12,
**gekennzeichnet durch**
Bestimmen einer Bohreffizienz während eines Bohrvorgangs; und
Steigern des Speicherns von elektrischer Energie in dem mindestens einen Energiespeicher (BAT), wenn das Bohren unterhalb einer maximalen Effizienz durchgeführt wird.

14. Verfahren nach einem der Ansprüche 10 bis 13,
**gekennzeichnet durch**
Bestimmen einer gegenwärtigen Last des Verbrennungsmotors (DI); und
Steigern des Verbrauchs von elektrischer Energie, die in dem mindestens einen Energiespeicher (BAT) gespeichert ist, proportional zu der bestimmten Steigerung der Last des Verbrennungsmotors (DI).

15. Verfahren nach einem der Ansprüche 10 bis 14,
**gekennzeichnet durch**
Bestimmen einer gegenwärtigen Verwendung von verdichteter Luft; und
Abschalten des elektrischen Verdichterantriebsmotors (CM), wenn keine verdichtete Luft verwendet wird.

## Revendications

1. Appareil de forage de roches comprenant :
un support mobile (2) ;
une unité de herchage (TR) pour la réalisation de l'entraînement de transfert du support (2) ;
au moins une flèche de forage (3) mobile par rapport au support (2) et dotée d'une unité de forage (DR) comprenant une machine de forage de roches (7) ;
un système de rinçage (FS) comprenant au moins un compresseur (CO) pour la production d'air pressurisé utilisé en rinçage d'un trou de forage (10) pendant le forage ;
un moteur à combustion (DI) pour la production d'énergie cinétique ;
au moins un générateur (GEN) agencé de sorte à être entraîné par le moteur à combustion (DI) et agencé de sorte à produire de l'énergie électrique dans un système électrique (ES) ; et
au moins un stockage d'énergie (BAT) raccordé au système électrique (ES) et agencé de sorte à stocker de l'énergie électrique produite par l'au moins un générateur (GEN) ;
**caractérisé en ce que**
l'appareil de forage de roches est actionné par un moteur à combustion moyennant quoi au moins une de l'unité de herchage (TR) et l'unité de forage (RD) est actionnée avec de l'énergie cinétique produite par le moteur à combustion (DI) et l'énergie électrique nécessaire de l'appareil de forage de roches est produite dans le système électrique (ES) par l'au moins un générateur (GEN) entraîné par le moteur à combustion ; et
l'au moins un compresseur (CO) du système de rinçage (FS) est entraîné au moyen d'au moins un moteur d'entraînement à compresseur électrique (CM) raccordé au système électrique (ES) et agencé de sorte à recevoir de l'énergie électrique du stockage d'énergie (BAT) du système électrique (ES) ;
dans lequel de l'énergie électrique stockée dans le stockage d'énergie (BAT) ou reçue par celui-ci est commandée pour dépendre de la charge du moteur à combustion (DI).

2. Appareil de forage de roches selon la revendication 1,
**caractérisé en ce que**
l'au moins un moteur d'entraînement à compresseur électrique (CM) est entraîné au moyen d'énergie électrique reçue par l'au moins un stockage d'énergie (BAT).

3. Appareil de forage de roches selon la revendication 1,
**caractérisé en ce que**
l'au moins un moteur d'entraînement à compresseur électrique (CM) est entraîné au moyen d'énergie électrique reçue par l'au moins un stockage d'énergie (BAT) et l'au moins un générateur (GEN).

4. Appareil de forage de roches selon l'une quelconque des revendications précédentes,
**caractérisé en ce que**
l'appareil de forage de roches (1) comprend au moins une unité de commande (CU) pour la commande du fonctionnement du système de rinçage (FS) ;
l'unité de commande (CU) est agencée de sorte à surveiller l'unité de forage (DR) ; et
l'unité de commande (CU) est agencée de sorte à ajuster la vitesse de fonctionnement du compresseur (CO) et la production d'air pressurisé selon le processus de forage.

5. Appareil de forage de roches selon l'une quelconque des revendications précédentes,
**caractérisé en ce que**
l'appareil de forage de roches (1) comprend au moins une unité de commande (CU) pour la commande du fonctionnement du système de rinçage (FS) ;
l'unité de commande (CU) est agencée de sorte à surveiller l'unité de herchage (TR) et à détecter l'entraînement de transfert du support (2) ; et
l'unité de commande (CU) est agencée pour commuter le moteur d'entraînement à compresseur électrique (CM) pour la durée de l'entraînement de transfert.

6. Appareil de forage de roches selon l'une quelconque des revendications précédentes,
**caractérisé en ce que**
le système électrique (ES) comprend au moins un dispositif de commande (CD) pour la commande de la rotation du moteur d'entraînement à compresseur électrique (CM).

7. Appareil de forage de roches selon l'une quelconque des revendications précédentes,
**caractérisé en ce que**
l'unité de herchage (TR) comprend au moins un moteur d'entraînement de herchage électrique (TM) raccordé au système électrique (ES) et générant de la puissance pour l'entraînement de transport.

8. Appareil de forage de roches selon l'une quelconque des revendications précédentes,
**caractérisé en ce que**
la machine de forage de roches est actionnée électriquement et raccordée au système électrique (ES).

9. Appareil de forage de roches selon l'une quelconque des revendications précédentes,
**caractérisé en ce que**
l'appareil de forage de roches (2) comprend un système hydraulique (HS) et des actionneurs hydrauliques raccordés au système hydraulique (HS) ;
le système hydraulique (HS) comprend au moins une pompe hydraulique (HP) pour la génération de pression hydraulique ; et
la pompe hydraulique (HP) est entraînée électriquement et raccordée au système électrique (ES).

10. Procédé d'entraînement d'un compresseur d'un appareil de forage de roches qui est doté d'un moteur à combustion (DI) ;
le procédé comprenant :
l'entraînement d'un compresseur (CO) au moyen d'un moteur ; et
la conduction d'air pressurisé produit à un système de rinçage (FS) ;
**caractérisé par**
la production d'énergie cinétique pour l'actionnement d'au moins une d'une unité de herchage (TR) et d'une unité de forage (RD) de l'appareil de forage de roches par le moteur à combustion (DI) et l'énergie électrique nécessaire pour un système électrique (ES) de l'appareil de forage de roches par au moins un générateur (GEN) entraîné par le moteur à combustion (DI) ;
le stockage de l'énergie électrique produite dans au moins un stockage d'énergie (BAT) du système électrique (ES) ; et
l'entraînement du compresseur (CO) au moyen d'un moteur d'entraînement à compresseur électrique (CM) recevant de l'énergie électrique du stockage d'énergie (BAT) du système électrique (ES) mécaniquement indépendamment du moteur à combustion (DI) ;
dans lequel de l'énergie électrique stockée dans le stockage d'énergie (BAT) ou reçue par celui-ci est commandée pour dépendre de la charge du moteur à combustion (DI).

11. Procédé selon la revendication 10,
**caractérisé par**
l'entraînement du moteur d'entraînement à compresseur électrique (CM) par l'utilisation d'énergie électrique stockée dans au moins un stockage d'énergie (BAT).

12. Procédé selon la revendication 10 ou 11,
**caractérisé par**
l'ajustement de la production d'air pressurisé selon le processus de forage.

13. Procédé selon l'une quelconque des revendications précédentes 10 à 12,
**caractérisé par**
la détermination de l'efficience de forage pendant un processus de forage ; et l'augmentation du stockage d'énergie électrique dans au moins un stockage d'énergie (BAT) lorsque le forage est réalisé sous efficience maximum.

14. Procédé selon l'une quelconque des revendications précédentes 10 à 13,
**caractérisé par**
la détermination de la charge actuelle du moteur à combustion (DI) ; et
l'augmentation de la consommation d'énergie électrique stockée dans au moins un stockage d'énergie (BAT) proportionnellement à l'augmentation détectée dans la charge du moteur à combustion (DI).

15. Procédé de forage de roches selon l'une quelconque des revendications précédentes 10 à 14,
**caractérisé par**
la détermination de l'utilisation actuelle d'air compressé ; et
la commutation du moteur d'entraînement à compresseur électrique (CM) lorsque l'air compressé n'est pas utilisé.
